# EUROPÄISCHE PATENTSCHRIFT

(11) **EP 3 367 128 B1**
(45) Veröffentlichungstag und Bekanntmachung des Hinweises auf die Patenterteilung: **28.10.2020**
(21) Anmeldenummer: 17157309.0
(22) Anmeldetag: 22.02.2017
(51) Int. Cl.: G01S 17/06, G01S 17/42, G01S 17/89, G01S 7/497

(54) **ÜBERWACHUNGSANORDNUNG**
SURVEILLANCE ARRANGEMENT
DISPOSITIF DE SURVEILLANCE

(43) Veröffentlichungstag der Anmeldung: 29.08.2018
(73) Patentinhaber: Leuze electronic GmbH + Co. KG, 73277 Owen/Teck (DE)
(72) Erfinder: Kirchner, Markus, 72636 Frickenhausen (DE); Wolf, Tilo, 73240 Wendlingen (DE); Heckmayr, Alexander, 86807 Buchlohe (DE); Feller, Bernhard, 86316 Friedberg (DE); Mohr, Stefan Dr., 80686 München (DE)
(74) Vertreter: Ruckh, Rainer Gerhard

(56) Entgegenhaltungen:
- EP-A2- 1 345 031
- DE-A1-102006 025 045
- US-A- 4 901 073
- US-A1- 2017 018 188

## Beschreibung

Die Erfindung betrifft eine Überwachungsanordnung gemäß dem Oberbegriff des Anspruchs 1.

Die Überwachungsanordnung umfasst generell einen Sensor, der einer Anlage zugeordnet ist. Mit dem Sensor erfolgt eine Objekterfassung, die insbesondere zur Steuerung der Anlage dienen kann.

Eine derartige Überwachungsanordnung ist aus der DE 102 11 779 B1 bekannt. Die dort beschriebene Überwachungsanordnung weist einen optischen Sensor mit einem Sendelichtstrahlen emittierenden Sender, einen Empfangslichtstrahlen empfangenden Empfänger, Mittel zur Führung der Sendelichtstrahlen innerhalb eines Abtastbereichs und eine Auswerteeinheit zur Auswertung der am Ausgang des Empfängers anstehenden Empfangssignale auf. Mit dem optischen Sensor erfolgt die Erfassung von Marken, welche ein Positionsmaßsystem bilden. Durch die Erfassung von Marken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich einer stationär angeordneten optoelektronischen Vorrichtung bewegt werden. Durch die fortlaufende Erfassung der Marken des Positionsmaßsystems werden in dem optischen Sensor kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeugs verwendet werden. Insbesondere kann in der Steuerung die Einhaltung von vorgegebenen Geschwindigkeitsprofilen für das Fahrzeug fortlaufend kontrolliert werden. Zusammen mit den aktuellen Informationen über die Position des Fahrzeugs kann dieses reproduzierbar und punktgenau auf vorgegebene Sollpositionen eingefahren werden.

Die EP 1 345 031 A2 betrifft eine optoelektronische Vorrichtung zur Erfassung von Marken und weist einen Sendelichtstrahlen emittierenden Sender, einen Empfangslichtstrahlen empfangenden Empfänger, Mittel zur Führung der Sendelichtstrahlen innerhalb eines Abtastbereichs und eine Auswerteeinheit zur Auswertung der am Ausgang des Empfängers anstehenden Empfangssignale auf. Die zu erfassenden Marken bilden ein Positionsmaßsystem. Durch Erfassung von Marken des Positionsmaßsystems zu zwei unterschiedlichen Zeitpunkten tl, t2 wird in der Auswerteeinheit aus der innerhalb des Zeitintervalls dt = t2 - t1 registrierten Positionsänderung der optoelektronischen Vorrichtung relativ zum Positionsmaßsystem die Geschwindigkeit der optoelektronischen Vorrichtung relativ zum Positionsmaßsystem bestimmt.

Die US 4,901,073 A betrifft ein optisches Sensorsystem zur Bestimmung der Absolutposition eines beweglichen Gegenstands relativ zu einem stationären Gegenstand. Das Sensorsystem umfasst einen Barcode-Scanner mittels dessen an einem Band angeordnete Barcodes erfasst werden. In den Barcodes ist deren Absolutposition im Band kodiert. In den Barcodes können auch Steuerzeichen wie Start- oder Stop-Zeichen enthalten sein. Durch diese kann die Abtastrichtung erfasst werden, in welcher der Barcode-Scanner die Barcodes abtastet.

Die DE 10 2006 025 045 A1 betrifft eine optoelektronische Vorrichtung umfassend einen Sensor mit einem einen Sendelichtstrahlen emittierenden Sender, einem Empfangslichtstrahlen empfangenden Empfänger, Mitteln zur Führung der Sendelichtstrahlen innerhalb eines Abtastbereichs sowie eine Auswerteeinheit zur Auswertung der am Ausgang des Empfängers anstehenden Empfangssignale sowie ein aus einer Anordnung von Marken gebildetes Positionsmaßsystem.

Durch Erfassung von Marken des Positionsmaßsystems ist mittels des Sensors dessen Position relativ zum Positionsmaßsystem bestimmbar. In Abhängigkeit der Geschwindigkeit des Sensors relativ zum Positionsmaßsystem ist der Sender des Sensors während vorgegebener Zeitintervalle abgeschaltet.

Die US 2017/0018188 A1 betrifft ein Detektionssystem auf einem Fahrzeug, das dazu ausgebildet ist, die Orientierung zu einer Fahrbahnbegrenzung zu bestimmen.

Der Erfindung liegt die Aufgabe zugrunde, eine Überwachungsanordnung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsanordnung mit einem einer Anlage zugeordneten Sensor. Der Sensor weist wenigstens ein Sensorelement und eine Auswerteeinheit auf, wobei das Sensorelement ausgebildet ist, Objekte innerhalb eines der Anlage zugeordneten Überwachungsbereichs zu erfassen und die Auswerteeinheit ausgebildet ist, in Abhängigkeit von Sensorsignalen des Sensorelements Objekterfassungsdaten zu generieren. Eine Speichereinheit ist vorgesehen, in welcher in Abhängigkeit der Objekterfassungsdaten generierte Kontrolldaten mittels einer Prüfsumme manipulationssicher abgespeichert sind. Anhand der Kontrolldaten ist die Funktion der Anlage und des Sensors kontrollierbar.

Der Grundgedanke der Erfindung besteht somit darin, den Sensor der Überwachungsanordnung nicht nur zur Objekterfassung einzusetzen. Die Funktionalität des Sensors und damit der Überwachungsanordnung wird dadurch erhöht, dass mittels des Sensors oder einer weiteren Einheit Kontrolldaten in Abhängigkeit der Objekterfassungsdaten des Sensors generiert werden, die manipulationssicher gespeichert werden, das heißt eine Verfälschung der Kontrolldaten kann sicher erkannt werden. Die Kontrolldaten bilden damit fehlersichere Daten, die insbesondere eine zeitaufgelöste Abfolge von Kontrolldaten bilden, anhand derer die Funktion der Anlage und auch die Funktion des Sensors kontrolliert werden kann.

Die dadurch automatisiert ablaufende Kontrollfunktion macht manuelle Eingriffe zur Kontrolle der Anlage und des Sensors weitgehend überflüssig, wodurch die Funktionalität der Überwachungsanordnung erheblich erhöht wird.

Für sicherheitstechnische Anwendungen kann der Sensor vorteilhaft als Sicherheitssensor ausgebildet sein. Zur Erfüllung der sicherheitstechnischen Anforderungen weist der Sicherheitssensor eine redundant aufgebaute Auswerteeinheit auf, insbesondere in Form zweier sich gegenseitig zyklisch überwachender Rechnereinheiten.

Der Sensor dient insbesondere zu Positionierungsaufgaben. Dies ist insbesondere für den Fall zweckmäßig, wenn es sich bei der Anlage um ein Fahrzeug, wie zum Beispiel einem fahrerlosen Transportsystem handelt. In diesem Fall ist der Sensor auf dem Fahrzeug angeordnet und detektiert definierte, stationär im Überwachungsbereich angeordnete kooperative Ziele. Anhand der Detektion der kooperativen Ziele generiert der Sensor Objekterfassungsdaten, die für eine Positionierung des Fahrzeugs genutzt werden können.

Gemäß einer vorteilhaften Ausgestaltung ist der Sensor ein optischer Sensor.

Gemäß einer ersten Variante ist der Sensor als Distanzsensor ausgebildet, mittels dessen die Distanzen zu kooperativen Zielen ermittelt werden, die beispielsweise in Form von Reflektoren ausgebildet sein können. Anhand der Distanzwerte kann die Position des Fahrzeugs und auch dessen Geschwindigkeit bestimmt werden.

Der Distanzsensor kann im einfachsten Fall einen Sender und einen Empfänger aufweisen, wobei der Sender Lichtstrahlen in eine feste, vorgegebene Richtung emittiert, die von einem kooperativen Ziel zum Empfänger zurückreflektiert werden, der von einer Photodiode gebildet sein kann. Die Distanzmessung kann beispielsweise nach einem Puls-Laufzeit-Verfahren erfolgen.

Der Distanzsensor kann dahingehend erweitert sein, dass dieser nicht nur einen einzelnen Empfänger wie zum Beispiel eine Photodiode aufweist, sondern eine zeilenförmige oder matrixförmige Anordnung von Empfangselementen aufweisen kann, das heißt der Empfänger ist von einer Kamera gebildet. In diesem Fall wird mit jedem Empfangselement eine Distanzmessung durchgeführt, so dass eine 3D-Vermessung von Objekten möglich ist.

Der Distanzsensor kann alternativ zu einem scannenden Distanzsensor weitergebildet sein, das heißt die vom Sender emittierten Lichtstrahlen sind periodisch in einem Erfassungsbereich geführt. Dies kann einerseits dadurch realisiert sein, dass der Sender und der Empfänger in einem rotierenden Messkopf integriert sind, so dass durch die Drehbewegung des Messkopfs die Lichtstrahlen periodisch im Erfassungsbereich geführt sind. Alternativ können der Sender und Empfänger stationär in einem Gehäuse des Sensors untergebracht sein, wobei diesen eine Ablenkeinheit, beispielsweise in Form eines motorisch angetriebenen Drehspiegels, zugeordnet ist, so dass die Lichtstrahlen mittels der Ablenkeinheit periodisch im Erfassungsbereich geführt sind.

Gemäß einer zweiten Variante sind die kooperativen Ziele von Marken eines Positionsmaßsystems gebildet. In den einzelnen Marken ist dann deren Position im Überwachungsbereich kodiert, so dass die Gesamtheit der Marken ein Maßband bildet. Der Sensor ist in diesem Fall als Codeleser ausgebildet. Durch die Erfassung der Marken mittels des Codelesers wird die Position des Codelesers und damit des Fahrzeugs, auf dem der Codeleser angeordnet ist, bestimmt.

Anhand der Kontrolldaten, die mittels des Sensors generiert werden, kann insbesondere die korrekte Anordnung der kooperativen Ziele, insbesondere des Positionsmaßsystems, geprüft werden, so dass eine aufwändige manuelle Überprüfung der kooperativen Ziele entfällt.

Erfindungsgemäß sind die Kontrolldaten mittels einer Prüfsumme manipulationssicher abgespeichert.

Anhand der Prüfsumme kann auf einfache und sichere Weise eine Verfälschung der gespeicherten Kontrolldaten aufgedeckt werden.

Die als zeitaufgelöste Folge von Daten abgespeicherten Kontrolldaten können vorteilhaft dadurch gekennzeichnet und individualisiert werden, indem diese mit wenigstens einem Zuordnungsmerkmal abgespeichert sind.

Durch diese Zuordnungsmerkmale können die gespeicherten Kontrolldaten zu einzelnen Datenaufzeichnungen eindeutig zugeordnet werden. Diese Zuordnungsmerkmale können beispielsweise von einem Benutzer über eine Eingabeeinheit eingegeben werden. Weiterhin können die Zuordnungsmerkmale auch selbsttätig in der Anlage generiert werden. Beispielsweise können die Zuordnungsmerkmale von Triggersignalen gebildet sein, die eine Steuereinheit der Anlage generiert.

Gemäß einer besonders vorteilhaften Ausgestaltung sind die Zuordnungsmerkmale von Zeitstempeln gebildet.

Durch die Zeitstempel sind die Kontrolldaten eindeutig dadurch gekennzeichnet, dass dokumentiert ist, zu welchen Zeitpunkten diese Kontrolldaten generiert wurden. Dadurch kann die Funktion des Sensors und der gesamten Überwachungsanordnung zeitaufgelöst kontrolliert werden.

Besonders vorteilhaft ist die Speichereinheit in einer Steuereinheit der Anlage integriert.

In der Steuereinheit können aus den Objekterfassungsdaten des Sensors Kontrolldaten gewonnen werden und in der Speichereinheit abgespeichert werden. In der Steuereinheit der Anlage können weiterhin anhand der Kontrolldaten Kontroll- und Überwachungsfunktionen durchgeführt werden.

Insbesondere können anhand der Kontrolldaten besondere Anlagensituationen, wie zum Beispiel ein Nothalt eines die Anlage bildenden Fahrzeugs, erkannt werden. Die Kontrolldaten können dann insbesondere direkt als Wartungsdaten genutzt werden. Alternativ werden in der Steuereinheit abhängig von den Kontrolldaten Wartungsdaten generiert. Hierbei ist vorteilhaft, dass derartige Wartungsdaten, die für eine Wartung der Anlage genutzt werden können, im laufenden Betrieb der Anlage generiert werden können, das heißt die Anlage muss hierfür nicht mehr in einen Wartungsbetrieb geschaltet werden, wodurch Ausfallzeiten der Anlage signifikant gesenkt werden können.

Die Kontrolldaten oder Wartungsdaten können von der Steuereinheit der Anlage über geeignete Schnittstellen, wie zum Bespiel Bussystemen, an externe Einheiten übertragen werden. Eine solche externe Einheit kann von einem Aufzeichnungsgerät gebildet sein, in welchem die Kontrolldaten beziehungsweise Wartungsdaten aufgezeichnet werden. Weiterhin kann in einer externen Einheit auch eine weitere Auswertung der Kontrolldaten beziehungsweise Wartungsdaten erfolgen.

Die Erfindung wird im Folgenden anhand der Zeichnungen erläutert. Es zeigen:
- Figur 1:: Schematische Darstellung eines Ausführungsbeispiels der erfindungsgemäßen Überwachungsanordnung.
- Figur 2:: Schematische Darstellung der Sensorkomponente eines Sensors für die Überwachungsanordnung gemäß Figur 1.
- Figur 3:: Schematische Darstellung der Steuereinheit eines Sensors für die Überwachungsanordnung gemäß Figur 1.

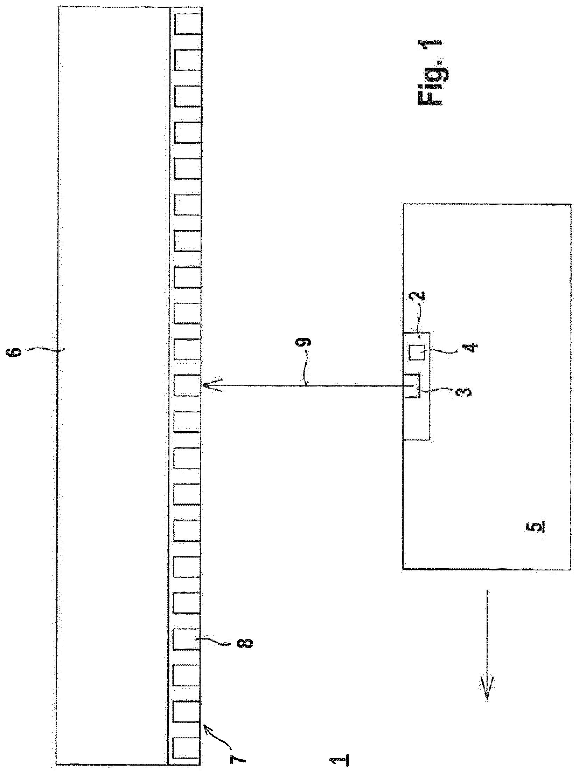

Figur 1 zeigt schematisch ein Ausführungsbeispiel der erfindungsgemäßen Überwachungsanordnung 1.

Die Überwachungsanordnung 1 weist einen Sensor in Form eines optischen Sensors 2 mit einem Sensorelement 3 und einer Auswerteeinheit 4 auf. Der optische Sensor 2 ist im vorliegenden Fall als Sicherheitssensor ausgebildet. Hierzu weist die Auswerteeinheit 4 einen redundanten Aufbau auf, beispielsweise in Form zweier sich gegenseitig zyklisch überwachender Rechnereinheiten.

Der optische Sensor 2 ist auf einem eine Anlage bildenden Fahrzeug 5 montiert, welches im vorliegenden Ausführungsbeispiel von einem spurgeführten Verschiebewagen gebildet ist. Alternativ kann das Fahrzeug 5 von einer Hängebahn, einem Regalbediengerät, einem Kran oder dergleichen gebildet sein.

Die Fahrbahn ist seitlich von einer Fahrbahnbegrenzung 6, wie zum Beispiel einer Leitplanke, begrenzt. Auf der dem Fahrzeug 5 zugewandten Frontseite der Fahrbahnbegrenzung 6 ist ein Positionsmaßsystem 7 aufgebracht, welches eine Anordnung mit kooperativen Zielen ausbildet.

Im vorliegenden Ausführungsbeispiel ist das Positionsmaßsystem 7 als Maßband ausgebildet, welches auf eine Unterlage aufgeklebt werden kann.

Das Maßband besteht aus einer Folge von in Längsrichtung des Positionsmaßstabs 7 hintereinander angeordneten Marken in Form von Barcodes 8. Jeder Barcode 8 ist auf ein separates Segment des Maßbandes aufgebracht, wobei benachbarte Segmente jeweils durch eine Schneidelücke getrennt sind. Die Segmente weisen jeweils eine identische Breite auf. Die Breiten der Schneidelücken zwischen den einzelnen Segmenten sind ebenfalls konstant.

Die einzelnen Segmente bilden somit identische Maßstabsmodule, so dass eine vorgegebene Länge des Maßbandes durch die Anzahl der Segmente multipliziert mit der Breite der Segmente und der Breite der jeweils anschließenden Schneidelücke vorgegeben ist. Die Segmente innerhalb des Maßbandes sind fortlaufend nummeriert, so dass jede Nummer eines Segments die Position innerhalb des Maßbandes kodiert. Die Nummer eines Segments ist in dem jeweiligen Barcode 8 kodiert.

Mit von dem Sensorelement 3 des optischen Sensors 2 emittierten Sendelichtstrahlen 9a werden die Barcodes 8 des Positionsmaßsystems 7 bei der Vorbeifahrt des Fahrzeugs 5 nacheinander abgetastet und erfasst. In der Auswerteeinheit 4 erfolgt die Dekodierung der Barcodes 8. Dadurch wird mit dem optischen Sensor 2 fortlaufend die Position des Fahrzeugs 5 relativ zum Positionsmaßsystem 7 bestimmt. Aus der zeitlichen Folge der vom optischen Sensor 2 erfassten Signale kann auch die Geschwindigkeit des Fahrzeugs 5 bestimmt werden.

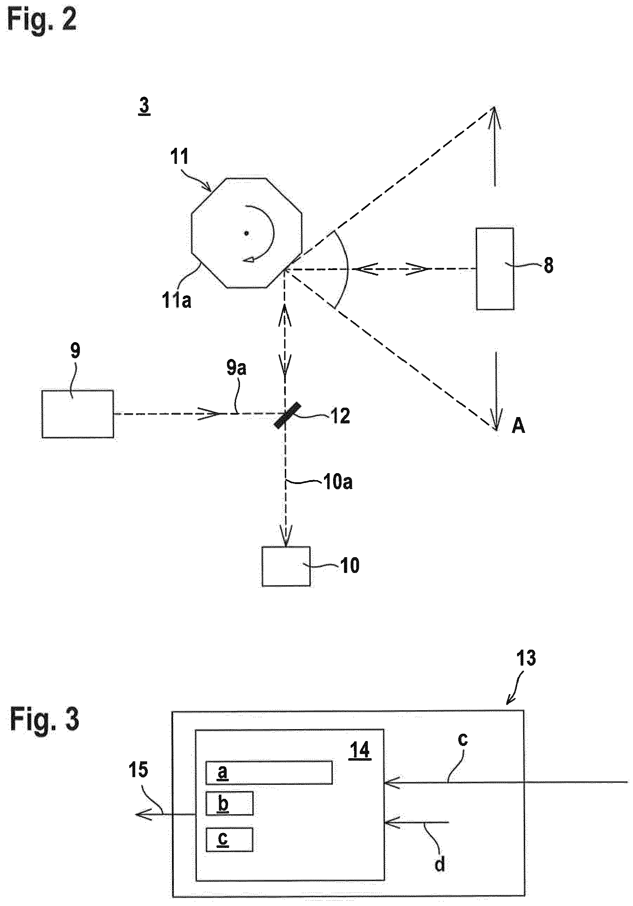

Figur 2 zeigt ein Ausführungsbeispiel der Sensorelemente 3 des optischen Sensors 2. Der optische Sensor 2 ist in diesem Fall als scannender Codeleser ausgebildet und umfasst einen Sendelichtstrahlen 9a emittierenden Sender 9 und einen Empfangslichtstrahlen 10a empfangenden Empfänger 10. Die vom Sender 9 emittierten Sendelichtstrahlen 9a und die von einem Barcode 8 zurückreflektierten Empfangslichtstrahlen 10a werden über eine Ablenkeinheit in Form eines mehrere spiegelnde Facetten 11a aufweisenden, um eine Drehachse drehbaren Polygonspiegelrads 11 geführt. Mittels eines Umlenkspiegels 12 wird eine koaxiale Strahlführung von Sendelichtstrahlen 9a und Empfangslichtstrahlen 10a erzielt. Durch die Drehbewegung des Polygonspiegelrads 11 werden die Sendelichtstrahlen 9a periodisch innerhalb eines Abtastbereichs A geführt.

Figur 3 zeigt eine Steuereinheit 13 des Fahrzeugs 5 oder allgemein der Anlage. Mit der Steuereinheit 13 wird das Fahrzeug 5 in Abhängigkeit der mit dem optischen Sensor 2 erfassten Positionswerte gesteuert, insbesondere wird das Fahrzeug 5 an bestimmte Positionen entlang der Fahrbahn positioniert.

Die Steuereinheit 13 weist eine Speichereinheit 14, in der Kontrolldaten a manipulationssicher gespeichert sind. Die manipulationssichere Speicherung erfolgt mit einer Prüfsumme b. Im vorliegenden Fall sind den Kontrolldaten a Zuordnungsmerkmale c zugeordnet, die ebenfalls mit der Prüfsumme b abgesichert sind.

Die Kontrolldaten a sind im einfachsten Fall direkt von den Objekterfassungsdaten des optischen Sensors 2 abgeleitet. Beispielsweise kann eine zeitliche Folge von ermittelten Positions- und/oder Geschwindigkeitswerten des Fahrzeugs 5, die mit dem optischen Sensor 2 ermittelt wurden, als Kontrolldaten a in der Speichereinheit 14 hinterlegt werden. Vorteilhaft sind diese Messwerte mit Zuordnungsmerkmalen c in Form von Zeitstempeln hinterlegt, so dass die Zeiten der Messwertgenerierung mit den Kontrolldaten a hinterlegt sind. Anstelle von Zeitstempeln können auch andere, die Kontrolldaten a kennzeichnende Zuordnungsmerkmale c vorgegeben werden, beispielsweise durch Benutzereingaben oder auch von der Steuereinheit 13 selbst.

Anhand der gespeicherten Kontrolldaten a können in der Steuereinheit 13 Kontroll- und Überwachungsfunktionen durchgeführt werden. Beispielsweise können die die Kontrolldaten a bildenden Positions- und/oder Geschwindigkeitswerte mit vorgegebenen Sollwerten verglichen werden. Falls die Kontrolldaten a von den Sollwerten um ein vorgegebenes Maß abweichen, kann in der Steuereinheit 13 beispielsweise ein Nothalt des Fahrzeugs 5 ausgelöst werden.

Weiterhin können aus den Kontrolldaten a in der Steuereinheit 13 Wartungsdaten für das Fahrzeug 5 abgeleitet werden. Hierzu werden die Objekterfassungsdaten des optischen Sensors 2 und gegebenenfalls externe Daten des Fahrzeugs 5 (gekennzeichnet mit dem Pfeil c) und interne Daten der Steuereinheit 13 (gekennzeichnet mit dem Pfeil d) in der Steuereinheit 13 ausgewertet, insbesondere um spezifische Anlagensituationen zu beschreiben oder zu analysieren. Beispielsweise kann mit den Kontrolldaten a eine Nothalt-Bremsung des Fahrzeug 5 als spezifische Anlagensituation erfasst werden, wobei hierzu neben den Positions- und Geschwindigkeitswerten des optischen Sensors 2 auch Fahrzeug-Parameter oder interne Steuerungsparameter zur Generierung der Wartungsdaten herangezogen werden.

Derartige Wartungsdaten können beispielsweise den Bremsweg des Fahrzeugs 5 bei einem Bremsvorgang dokumentieren.

Weiterhin können die Wartungsdaten dokumentieren, ob das Positionsmaßsystem 7 korrekt angeordnet ist oder ob dieses beschädigt ist.

Die Kontrolldaten a, die in der Speichereinheit 14 abgespeichert sind, können über eine Schnittstelle 15 wie ein Bussystem an eine externe Einheit ausgelesen werden.

Die externe Einheit kann beispielsweise ein Aufzeichnungsgerät sein, wo die Kontrolldaten a zu Dokumentationszwecken dauerhaft gespeichert werden. Alternativ können in der externen Einheit weitere Auswertungen der Kontrolldaten a erfolgen.

### Bezugszeichenliste

- (1): Überwachungsanordnung
- (2): Optischer Sensor
- (3): Sensorelement
- (4): Auswerteeinheit
- (5): Fahrzeug
- (6): Fahrbahnbegrenzung
- (7): Positionsmaßsystem
- (8): Barcode
- (9): Sender
- (9a): Sendelichtstrahlen
- (10): Empfänger
- (10a): Empfangslichtstrahlen
- (11): Polygonspiegelrad
- (11a): Facetten
- (12): Umlenkspiegel
- (13): Steuereinheit
- (14): Speichereinheit
- (15): Schnittstelle
- (A): Abtastbereich
- (a): Kontrolldaten
- (b): Prüfsumme
- (c): Zuordnungsmerkmal

## Patentansprüche

1. Überwachungsanordnung (1) mit einem einer Anlage zugeordneten Sensor, wobei der Sensor wenigstens ein Sensorelement (3) und eine Auswerteeinheit (4) aufweist, wobei das Sensorelement (3) ausgebildet ist, Objekte innerhalb eines der Anlage zugeordneten Überwachungsbereichs zu erfassen und die Auswerteeinheit (4) ausgebildet ist, in Abhängigkeit von Sensorsignalen des Sensorelements (3) Objekterfassungsdaten zu generieren, **dadurch gekennzeichnet, dass** eine Speichereinheit (14) vorgesehen ist, in welcher in Abhängigkeit der Objekterfassungsdaten generierte Kontrolldaten (a) mittels einer Prüfsumme (b) manipulationssicher abgespeichert sind, wobei anhand der Kontrolldaten (a) die Funktion der Anlage und des Sensors kontrollierbar ist.

2. Überwachungsanordnung nach Anspruch 1, **dadurch gekennzeichnet, dass** mittels des Sensors kooperative Ziele erfassbar sind.

3. Überwachungsanordnung nach einem der Ansprüche 1 oder 2, **dadurch gekennzeichnet, dass** der Sensor ein Distanzsensor ist.

4. Überwachungsanordnung nach Anspruch 2, **dadurch gekennzeichnet, dass** die kooperativen Ziele von Marken eines Positionsmaßsystems (7) sind.

5. Überwachungsanordnung nach Anspruch 4, **dadurch gekennzeichnet, dass** der Sensor ein Codeleser ist.

6. Überwachungsanordnung nach einem der Ansprüche 1 bis 5, **dadurch gekennzeichnet, dass** die Anlage ein Fahrzeug (5), insbesondere ein fahrerloses Transportsystem ist.

7. Überwachungsanordnung nach einem der Ansprüche 1 bis 6, **dadurch gekennzeichnet, dass** der Sensor mit der Anlage verbunden ist.

8. Überwachungsanordnung nach einem der Ansprüche 2 bis 7, **dadurch gekennzeichnet, dass** die kooperativen Ziele stationär im Überwachungsbereich angeordnet sind.

9. Überwachungsanordnung nach einem der Ansprüche 1 bis 8, **dadurch gekennzeichnet, dass** die Kontrolldaten (a) mit wenigstens einem Zuordnungsmerkmal (c) abgespeichert sind.

10. Überwachungsanordnung nach Anspruch 9, **dadurch gekennzeichnet, dass** die Zuordnungsmerkmale (c) durch Bedienereingaben oder selbsttätig durch die Anlage generiert sind.

11. Überwachungsanordnung nach Anspruch 9, **dadurch gekennzeichnet, dass** die Zuordnungsmerkmale (c) von Zeitstempeln gebildet sind.

12. Uberwachungsanordnung nach einem der Ansprüche 9 bis 11, **dadurch gekennzeichnet, dass** die Kontrolldaten (a) mit den Zuordnungsmerkmalen (c) mittels einer Prüfsumme manipulationssicher abgespeichert sind.

13. Überwachungsanordnung nach einem der Ansprüche 1 bis 12, **dadurch gekennzeichnet, dass** die Speichereinheit (14) in einer Steuereinheit (13) der Anlage integriert ist.

14. Überwachungsanordnung nach einem der Ansprüche 1 bis 13, **dadurch gekennzeichnet, dass** die Kontrolldaten (a) Wartungsdaten sind oder dass die Wartungsdaten durch eine Auswertung der Kontrolldaten (a) gewonnen sind.

15. Überwachungsanordnung nach Anspruch 14, **dadurch gekennzeichnet, dass** mit den Wartungsdaten ein Bremsweg eines Fahrzeugs (5) oder der Zustand eines Positionsmaßsystems (7) dokumentiert ist.

16. Überwachungsanordnung nach Anspruch 14, **dadurch gekennzeichnet, dass** die Kontrolldaten (a) oder Wartungsdaten in einer externen Einheit ausgewertet und/oder aufgezeichnet werden.

## Claims

1. A surveillance arrangement (1) with a sensor assigned to an installation, wherein the sensor has at leasts a sensor element (3) and an evaluation unit (4), wherein the sensor element (3) is designed to detect objects within a surveillance area assigned to the installation and the evaluation unit (4) is designed to detect objects within a surveillance area assigned to the installation, to generate object detection data as a function of sensor signals of the sensor element (3), **characterised in that** a memory unit (14) is provided in which control data (a) generated as a function of the object detection data restored in a tamper-proof manner by means of a checksum (b), it being possible to check the function of the system and of the sensor by means of the control data (a).

2. The surveillance arrangement according to claim 1, **characterised in that** cooperative targets can be detected by means of the sensor.

3. The surveillance arrangement according to one of claims 1 or 2, **characterised in that** the sensor is a distance sensor.

4. The surveillance arrangement according to claim 2, **characterised in that** the cooperative objectives of marks are of a positional measurement system (7).

5. The surveillance arrangement according to claim 4, **characterised in that** the sensor is a code reader.

6. The surveillance arrangement according to one of claims 1 to 5, **characterised in that** the arrangement is a vehicle (5), in particular a driverless transport system.

7. The surveillance arrangement according to one of claims 1 to 6, **characterised in that** the sensor is connected to the installation.

8. The surveillance arrangement according to one of claims 2 to 7, **characterised in that** the cooperative targets are arranged stationary in the surveillance area.

9. The surveillance arrangement according to one of claims 1 to 8, **characterised in that** the surveillance data (a) are stored with at least one allocation feature(c).

10. The surveillance arrangement according to claim 9, **characterised in that** the allocation features (c) are generated by operator inputs or automatically by the plant.

11. The surveillance arrangement according to claim 9, **characterised in that** the allocation features (c) are formed by time stamps.

12. The surveillance arrangement according to one of the claims 9 to 11, thereby indicates that the control data (a) with the assignment features (c) are stored in a tamper-proof manner by means of a checksum.

13. The surveillance arrangement according to one of claims 1 to 12, **characterised in that** the memory unit (14) is integrated in a control unit (13) of the installation.

14. The surveillance arrangement according to one of claims 1 to 13, **characterised in that** the control data (a) are maintenance data or that the maintenance data are obtained by evaluating the control data (a).

15. The surveillance arrangement according to claim 14, **characterised in that** a braking distance of a vehicle (5) or the state of a position measuring system (7) is documented with the maintenance data.

16. The surveillance arrangement according to claim 14, **characterised in that** the control data (a) or maintenance data are evaluated and/or recorded in an external unit.

## Revendications

1. Dispositif de surveillance (1) avec un capteur associé à une installation, le capteur présentant au moins un élément capteur (3) et une unité d'évaluation (4), l'élément capteur (3) étant conçu pour détecter des objets dans une zone desurveillance associée à l'installation et l'unité d'évaluation (4) étant conçue pourdétecter des objets dans une zone desurveillance associée à l'installation,pour générer des données dedétection d'objet en fonction des signaux de capteur de l'élément capteur (3), **caractérisé en ce qu'**il est prévu une unité de mémoire (14) dans laquelle des données de commande (a) générées en fonction des données de détection d'objet sont restituées de manière inviolable au moyen d'une somme de contrôle (b), le fonctionnement du système et du capteur pouvant être vérifié au moyen des données de commande (a).

2. Dispositif de surveillance selon la revendication 1, **caractérisé par le fait que** les cibles coopératives peuvent être détectées au moyen du capteur.

3. Dispositif de surveillance selon l'une des revendications 1 ou 2, **caractérisé en ce que** le capteur est un capteur de distance.

4. Dispositif de surveillance selon la revendication 2, **caractérisé en ce que** les objectifs de coopération des marques sont d'un système de mesure de position (7).

5. Dispositif de surveillance selon la revendication 4,**caractérisé en ce que** le capteur est un lecteur de code.

6. Dispositif de surveillance selon l'une des revendications 1 à 5, **caractérisé en ce que** le dispositif est un véhicule (5), en particulier un système de transport sans conducteur .

7. Dispositif de surveillance selon l'une des revendications 1 à 6, **caractérisé en ce que** le capteur est relié à l'installation.

8. Dispositif de surveillance selon l'une des revendications 2 à 7, **caractérisé en ce que** les cibles coopératives sont disposéesde manière stationnaire dans la zone de surveillance.

9. Dispositif de surveillance selon l'une des revendications 1 à 8, **caractérisé en ce que** les données de surveillance (a) sont stockées avec au moins une caractéristique d'attribution (c).

10. Dispositif de surveillance selon la revendication 9, **caractérisé en ce que** les caractéristiques d'attribution (c) sont générées par les entrées de l'opérateur ou automatiquement par l'installation.

11. Dispositif de surveillance selon la revendication 9, **caractérisé en ce que** les caractéristiques d'attribution (c) sont formées par des estampilles temporelles.

12. Dispositif de surveillance selon l'une des revendications 9 à 11, indique ainsi que les données de contrôle (a) avec les caractéristiques d'affectation (c) sont stockées de manière inviolable au moyen d'une somme de contrôle.

13. Dispositif de surveillance selon l'une des revendications 1 à 12, **caractérisé en ce que** l'unité de mémoire (14) est intégrée dans une unité de commande (13) de l'installation.

14. Dispositif de surveillance selon l'une des revendications 1 à 13, **caractérisé en ce que** les données de contrôle (a) sont des données de maintenance ou que les données de maintenance sont obtenues par l'évaluation des données de contrôle (a).

15. Dispositif de surveillance selon la revendication 14, **caractérisé en ce qu'**une distance de freinage d'un véhicule (5) ou l'état d'un système de mesure de position (7) est documenté avec les données de maintenance.

16. Dispositif de surveillance selon la revendication 14, **caractérisé en ce que** les données de contrôle (a) ou les données de maintenance sont évaluées et/ou enregistrées dans une unité externe .
